Europäisches Patentamt

(19) **European Patent Office**

**Office européen des brevets**

(11) Numéro de publication: **0 113 614**
**B1**

(12) # FASCICULE DE BREVET EUROPEEN

(45) Date de publication du fascicule du brevet:
**14.05.86**

(51) Int. Cl.⁴: **A 01 N 61/02,** A 01 N 59/02,
A 01 N 59/00

(21) Numéro de dépôt: **83402355.8**

(22) Date de dépôt: **06.12.83**

(54) Compositions répulsives à l'égard du gibier et procédé de mise en oeuvre desdites compositions.

(30) Priorité: **14.12.82 FR 8220917**

(43) Date de publication de la demande:
**18.07.84 Bulletin 84/29**

(45) Mention de la délivrance du brevet:
**14.05.86 Bulletin 86/20**

(84) Etats contractants désignés:
**BE DE FR GB NL SE**

(56) Documents cités:
**DE - B - 1 248 361**
**DE - C - 317 967**
**FR - A - 946 748**

(73) Titulaire: **Usines LAMBIOTTE, Tour Manhattan -
Cedex 21, F-92091 Paris La Défense (FR)**

(72) Inventeur: **Bloch, Lucien, 10-12 Place du Général de
Gaulle, F-54450 Blamont (FR)**
Inventeur: **Lemaire, Albert, 12 rue des Ponts de Nevers,
F-58700 Premery (FR)**

(74) Mandataire: **Leboulenger, Jean, Société ATOCHEM
Service Propriété Industrielle, F-92091 Paris La
Défense 2 Cédex 22 (FR)**

# Description

La présente invention a pour objet des compositions qui ont la propriété de repousser la faune sauvage (cervidés, sangliers, caprins, oiseaux, ursidés) des endroits où elle peut être indésirable (jeunes forêts, cultures annuelles, ensilages, etc.), en agissant sur les organes olfactifs des animaux. L'invention concerne également des procédés de protection desdits endroits contre la faune mettant en œuvre lesdites compositions. De tels procédés ont l'énorme avantage de ne causer aucun dommage aux animaux dissuadés.

De nombreuses tentatives ont déjà été réalisées pour repousser à l'aide de produits répulsifs la faune sauvage des endroits où elle est indésirable, mais ces tentatives se sont soldées en général par un échec, parce que les produits employés présentent une durée d'action trop courte ou voient leur efficacité annulée par les conditions climatiques (température trop basse) ou l'accoutumance du gibier aux odeurs dégagées.

Les compositions selon l'invention ont l'avantage de présenter un bouquet de parfums auquel aucun gibier ne semble s'habituer et d'être constituées de substances de volatilités telles que l'émission de vapeurs se poursuit aux basses températures.

Les compositions selon l'invention contiennent essentiellement 100 parties en poids d'un mélange contenant 2 parties en volume d'huile empyreumatique, 0,5 à 2 parties en volume d'une solution aqueuse de formaldéhyde à 35% à 40% de formaldéhyde et 0,5 à 2 parties en volume d'une solution aqueuse d'ammoniac à 28° B pour 10 parties en poids d'une solution aqueuse de sulfure d'ammonium à 40% à 44% de sulfure d'ammonium.

Les compositions selon l'invention peuvent contenir en outre des additifs inertes tels que des diluants solides (talc, silice, kieselguhr, craie, terre de diatomées, argile, etc.), des diluants liquides (eau, huiles minérales, solvants organiques tels que cétones, alcools, hydrocarbures ou leurs dérivés chlorés), des agents tensio-actifs, etc. Ces additifs inertes ont pour rôle de diluer la matière active, de faciliter sa mise en suspension aqueuse, et d'améliorer son adhérence sur les supports, sa conservation et sa résistance aux agents atmosphériques et aux dégradations biologiques.

Les compositions selon l'invention peuvent se présenter sous forme de suspensions aqueuses, de solutions dans un solvant organique émulsifiable dans l'eau, de pâtes, de poudres ou de granulés imprégnés de matière active et applicables en l'état ou dispersables dans l'eau.

Dans les compositions selon l'invention les proportions de solution aqueuse de formaldéhyde et de solution aqueuse d'ammoniac varient suivant le type de faune sauvage à repousser.

Par huile empyreumatique on entend, dans le cadre de la présente invention, un liquide obtenu à partir du jus pyroligneux provenant de la carbonisation des bois, en particulier des bois feuillus, par la suite des opérations suivantes:

Le jus pyroligneux, obtenu par condensation des fractions condensables issues de la carbonisation, est soumis à une première distillation qui permet d'éliminer les fractions les plus volatiles (alcools essentiellement, en particulier méthanol), puis le résidu est soumis à un fractionnement qui permet d'éliminer l'eau et la majorité des acides (acide acétique en particulier). Le résidu issu du fractionnement, qui est constitué des fractions lourdes, est soumis à un entraînement à la vapeur d'eau qui permet d'éliminer les goudrons (non entraînables). La fraction entraînée à la vapeur est lavée à l'eau pour éliminer les constituants solubles dans l'eau. La fraction insoluble dans l'eau ainsi isolée constitue l'huile empyreumatique.

Une huile empyreumatique type présente les caractéristiques physico-chimiques suivantes:
- densité comprise entre 1,07 et 1,09
- température d'ébullition commençante sous la pression atmosphérique très voisine de 100° C
- température de fin d'ébullition sous la pression atmosphérique très voisine de 250° C
- 80% du produit distillé entre les deux températures précitées, les 20% restant constituant un résidu non distillable sous la pression atmosphérique
- acidité (exprimée en acide acétique): 2% à 4%
- nature chimique: essentiellement mélange complexe de phénols non substitués ou substitués sur le noyau aromatique par un ou plusieurs groupes alkyle de bas poids moléculaire ou méthoxy.

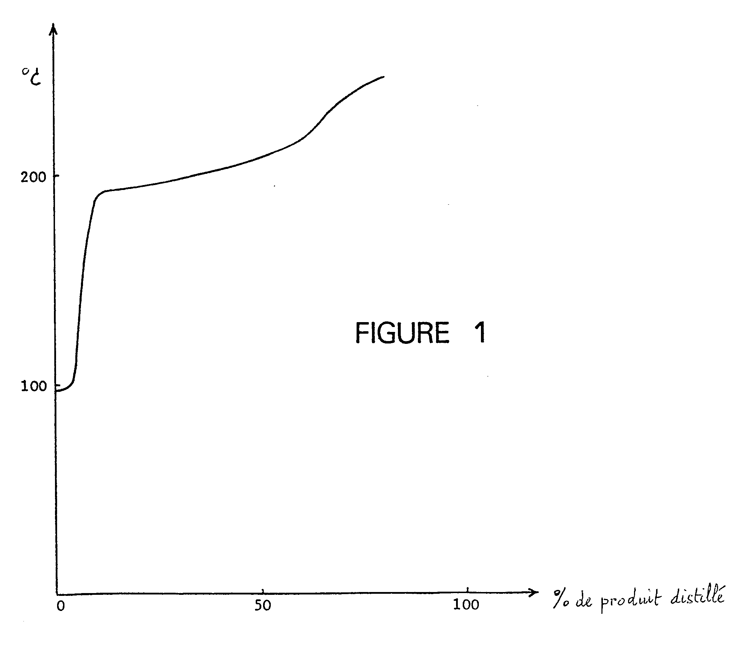

La figure 1 représente la courbe de distillation, sous la pression atmosphérique, d'une huile empyreumatique type (distillation sur colonne Vigreux de hauteur 40 cm). En abscisse est porté le pourcentage de produit distillé et en ordonnée la température de distillation en 0° C.

La figure 2 représente le chromatogramme d'une huile empyreumatique type, obtenu en chromatographie en phase gazeuse dans les conditions suivantes:
- Colonne: longueur: 1,83 mètre;diamètre: 3,2 mm
- Support: chromosorb WHP 80-100
- Phase stationnaire: silicone OV 17 3%
- Gaz vecteur: nature: azote; débit: 20 ml/min
- Détecteur à ionisation de flamme: débit d'hydrogène 30 ml/min; flamme: débit d'air 400 ml/min; température 250° C
- Température de l'injecteur: 210° C
- Volume de produit injecté: 1 µl
- Température de la colonne programmée pour monter de 60° C à 145° C à raison de 2° C par minute.

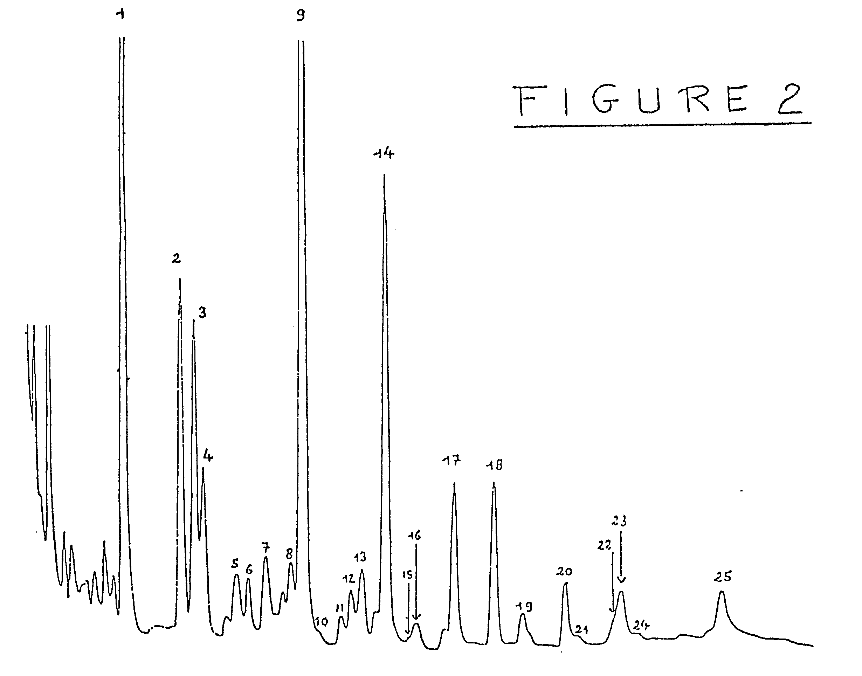

Les pics numérotés 1 à 25 sur la figure 2 correspondent respectivement aux composés suivants:
1 — phénol
2 — o-crésol
3 — m-crésol
4 — p-crésol
5 — xylénol
6 — xylénol
7 — éthyl phénol
8 — méthylcyclopentènolone
9 — gaïacol
10 — triméthylphénol

11 — pyrocatéchol
12 — oxyméthylpyrrone
13 — propyl phénol
14 — créosol
15 — méthyl-3 pyrocatéchol
16 — méthyl-4 pyrocatéchol
17 — éthyl gaïacol
18 — diméthoxy-2,6 phénol
19 — éther monométhylique du pyrogallol
20 — méthyl-4 diméthoxy-2,6 phénol
21 — éther monométhylique du méthyl-4 pyrogallol
22 — éthyl-4 diméthoxy-2,6 phénol
23 — éther monométhylique de l'éthyl-4 pyrogallol
24 — éther monométhylique du propyl-4 pyrogallol
25 — composé de poids moléculaire 266.

Les compositions selon l'invention sont préparées par mélange intime des divers constituants dans les proportions indiquées précédemment:

Pour éloigner des zones à protéger la faune sauvage terrestre, les compositions selon l'invention sont placées à la périphérie desdites zones, par exemple dans des évaporateurs. Dans le cas où la zone à protéger est une zone forestière, on peut également badigeonner les arbres à la périphérie avec les compositions selon l'invention sous forme liquide.

Pour éloigner des zones à protéger (par exemple ensilages de maïs) les oiseaux, les compositions selon l'invention sont placées dans des évaporateurs à l'intérieur même de la zone à protéger.

Les exemples suivants illustrent l'invention sans la limiter.

*Exemple 1*

On prépare, par mélange intime des divers constituants, une composition A contenant 100 parties en poids d'un mélange de 2 parties en volume d'huile empyreumatique, 0,5 partie en volume de solution aqueuse de formaldéhyde à 37% de formaldéhyde et 1 partie en volume de solution aqueuse d'ammoniac à 28° B, et 10 parties en poids de solution aqueuse de sulfure d'ammonium à 44% de sulfure d'ammonium.

Cette composition A convient particulièrement à la répulsion des cervidés.

*Exemple 2*

On prépare, par mélange intime des divers constituants, une composition B contenant 100 parties en poids d'un mélange de 2 parties en volume d'huile empyreumatique, 1 partie en volume de solution aqueuse de formaldéhyde à 37% de formaldéhyde et 0,5 partie en volume de solution aqueuse d'ammoniac à 28° B, et 10 parties en poids de solution aqueuse de sulfure d'ammonium à 44% de sulfure d'ammonium.

Cette composition B convient particulièrement à la répulsion des sangliers.

*Exemple 3*

On prépare, par mélange intime des divers constituants, une composition C contenant 100 parties en poids d'un mélange de 2 parties en volume d'huile empyreumatique, 1 partie en volume de solution aqueuse de formaldéhyde à 37% de formaldéhyde et 0,5 partie en volume de solution aqueuse d'ammoniac à 28° B, 10 parties en poids de solution aqueuse de sulfure d'ammonium à 44% de sulfure d'ammonium, 27,5 parties en poids de talc micronisé ayant une taille de particules de 10 à 15 μm et 5,5 parties en poids de silice divisée.

La composition C se présente, après malaxage, sous la forme d'une pâte homogène.

*Exemple 4:* Protection des jeunes forêts contre les cervidés.

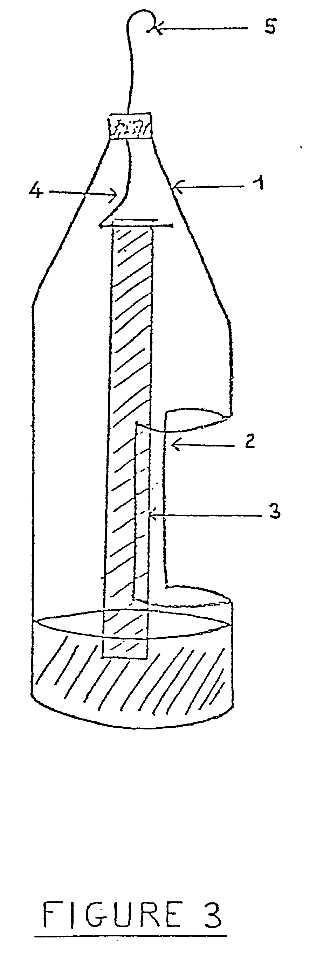

La composition A selon l'exemple 1, qui se présente sous la forme d'un liquide brunâtre, est placée dans les évaporateurs représentés sur la fig. 3.

Ces évaporateurs sont constitués par une bouteille en chlorure de polyvinyle (1) munie d'une fenêtre (2) et contenant une mèche (3) plongeant dans le liquide et accrochée au bouchon de la bouteille par un crochet (4). La bouteille peut elle-même être suspendue à l'aide du crochet (5). Chaque évaporateur contient au fond environ 200 ml de composition A.

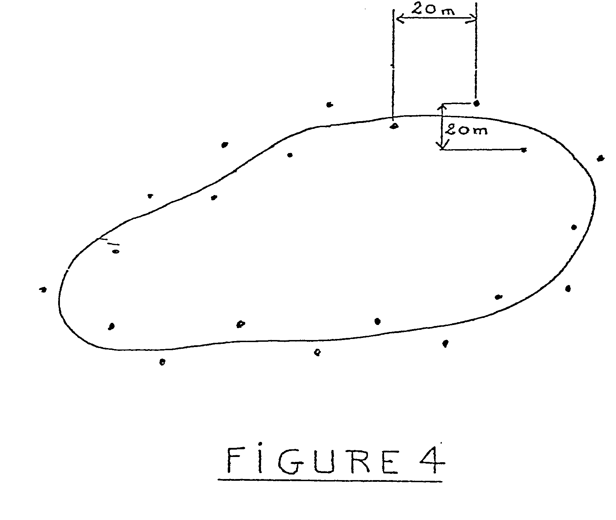

Les évaporateurs sont placés en quinconce, suivant le schéma indiqué sur la fig. 4, à la périphérie d'un hectare planté de jeunes pins Douglas, la distance entre deux évaporateurs successifs étant de 20 m en profondeur et de 20 m, comptée parallèlement à la lisière du bois. Les évaporateurs sont placés à 1 m de hauteur et sont réalimentés en composition A régulièrement tous les mois.

Dans cette implantation, les cervidés ont été observés. Ils s'approchent de la zone protégée sans y pénétrer, s'arrêtent, puis s'en retournent.

Sur une période de 6 mois, aucun dégât n'est observé sur la végétation en place, alors que, dans une parcelle voisine non protégée, les abroutissements et bris de jeunes arbres sont nombreux.

Ce type d'expérimentation a été reproduit sur plusieurs sites et plusieurs essences, et chaque fois, l'efficacité répulsive vis-à-vis des cervidés a été totale.

*Exemple 5:* Protection des ensilages de maïs contre les corbeaux.

Le produit C selon l'exemple 3 est placé dans des récipients métalliques noirs sertis. Des trous sont ménagés à la partie supérieure pour permettre l'évaporation des matières actives.

Les récipients sont distribués à la surface de bâches en matière plastique recouvrant des ensilages de maïs, à raison de 1 tous les 5 m.

Les bâches ainsi équipées ne sont plus attaquées par les corbeaux, alors que, dans des silos témoins non protégés, les bâches en matière plastique sont perforées. Ces perforations sont autant de voies d'entrée pour la pluie et les denrées stockées sont abîmées.

**Revendications**

1. Compositions répulsives à l'égard de la faune sauvage, caractérisées en ce qu'elles contiennent 100 parties en poids d'un mélange contenant 2 parties en volume d'huile empyreumatique, 0,5 à 2 parties en volume d'une solution aqueuse de formaldéhyde à 35% à 40% de formaldéhyde et 0,5 à 2 parties en volume d'une solution aqueuse d'ammoniac à 28° B pour 10 parties en poids d'une solution aqueuse de sulfure d'ammonium à 40% à 44% de sulfure d'ammonium, l'huile empyreumatique étant constituée par la fraction liquide, insoluble dans l'eau, isolée à partir du jus pyroligneux provenant de la carbonisation des bois en soumettant le jus pyroligneux à une première distillation pour éliminer les fractions les plus volatiles, puis en soumettant le résidu à un fractionnement pour éliminer l'eau et la majorité des acides, en soumettant ensuite le résidu à un entraînement à la vapeur d'eau pour éliminer les goudrons et en lavant à l'eau la fraction entraînée à la vapeur pour éliminer les constituants solubles dans l'eau.

2. Compositions selon la revendication 1, caractérisées en ce qu'elles contiennent en plus des additifs inertes.

3. Compositions selon la revendication 2 sous forme de pâtes, caractérisées en ce que l'additif inerte incorporé est un diluant solide.

4. Procédé de protection contre la faune sauvage terrestre des zones dont on veut éloigner ladite faune, caractérisé en ce que l'on place, à la périphérie desdites zones, une composition selon l'une quelconque des revendications 1 à 3.

5. Procédé selon la revendication 4, caractérisé en ce que la composition est sous forme liquide et est placée dans des évaporateurs.

6. Procédé selon la revendication 4, caractérisé en ce que la zone à protéger est une zone forestière et on badigeonne les arbres à la périphérie avec la composition sous forme liquide.

7. Procédé de protection contre les oiseaux des zones dont on veut éloigner lesdits oiseaux, caractérisé en ce que l'on place, à l'intérieur desdites zones, une composition selon l'une quelconque des revendications 1 à 3 dans des évaporateurs.

8. Procédé selon la revendication 7, caractérisé en ce que la composition utilisée est sous la forme d'une pâte.

## Patentansprüche

1. Zusammensetzungen zum Vertreiben von Wildtieren, dadurch gekennzeichnet, dass sie 100 Gewichtsteile einer Mischung, die aus 2 Volumenteilen Holzteeröl, 0,5 bis 2 Volumenteilen einer wässrigen 35 bis 40%igen Formaldehydlösung und 0,5 bis 2 Volumenteilen einer wässerigen Ammoniaklösung von 28°Bé besteht, und 10 Gewichtsteile einer wässerigen 40 bis 44%igen Ammoniumsulfatlösung enthalten, wobei das Holzteeröl aus der wasserunlöslichen, flüssigen Fraktion besteht, die aus dem bei der Holzverkohlung entstehenden Holzextrakt isoliert wird, indem man den Holzextrakt einer ersten Destillation zur Abtrennung der leichter flüchtigen Fraktionen unterwirft, dann den Rückstand zur Abtrennung von Wasser und des überwiegenden Teils der Säuren fraktioniert, und schliesslich den Rückstand einer Wasserdampfdestillation zur Abtrennung der Teere unterwirft und die mit dem Wasserdampf mitgeführte Fraktion zur Abtrennung der wasserlöslichen Bestandteile mit Wasser wäscht.

2. Zusammensetzungen nach Anspruch 1, dadurch gekennzeichnet, dass sie ausserdem inerte Additive enthalten.

3. Zusammensetzungen nach Anspruch 2 in Form von Pasten, dadurch gekennzeichnet, dass das darin enthaltene inerte Additiv ein festes Lösungsmittel ist.

4. Verfahren zum Schutz bestimmter Zonen gegen landlebende Wildtiere, dadurch gekennzeichnet, dass man am Rand dieser Zonen eine Zusammensetzung nach einem der Ansprüche 1 bis 3 plaziert.

5. Verfahren nach Anspruch 4, dadurch gekennzeichnet, dass die Zusammensetzung in flüssiger Form vorliegt und in Verdampfern plaziert wird.

6. Verfahren nach Anspruch 4, dadurch gekennzeichnet, dass die zu schützende Zone eine Waldzone ist und man die Bäume am Rand dieser Zone mit der Zusammensetzung in flüssiger Form bestreicht.

7. Verfahren zum Schutz bestimmter Zonen gegen Vögel, dadurch gekennzeichnet, dass man im Inneren dieser Zone eine Zusammensetzung nach einem der Ansprüche 1 bis 3 in Verdampfern plaziert.

8. Verfahren nach Anspruch 7, dadurch gekennzeichnet, dass die Zusammensetzung in Form einer Paste eingesetzt wird.

## Claims

1. Compositions which repel wild animals, characterized in that they contain 100 parts by weight of a mixture containing 2 parts by volume of empyreumatic oil, 0.5 to 2 parts by volume of aqueous formaldehyde solution (containing 35% to 40% of formaldehyde) and 0.5 to 2 parts by volume of aqueous ammonia solution (28° B) to 10 parts by weight of aqueous ammonium sulphide solution (containing 40% to 44% of ammonium sulphide), the empyreumatic oil consisting of the water-insoluble liquid fraction which is isolated from the pyroligneous liquor originating from the carbonization of wood by subjecting the pyroligneous liquor to a first distillation to remove the most volatile fractions, then subjecting the residue to a fractionation to remove the water and most of the acids, then subjecting the residue to steam distillation to remove the tars and washing with water the steam-distilled fraction to remove the watersoluble constituents.

2. Compositions according to Claim 1, characterized in that they contain in addition inert additives.

3. Compositions according to Claim 2 in the form of pastes, characterized in that the incorporated inert additive is a solid diluent.

4. Process for protection against terrestrial wild animals of zones from which it is desired to banish the said wild animals, characterized in that a composition according to any one of Claims 1 to 3 is placed at the periphery of the said zones.

5. Process according to Claim 4, characterized in that the composition is in liquid form and is placed in evaporators.

6. Process according to Claim 4, characterized in that the zone to be protected is a forest zone and the trees at the periphery are painted with the composition in liquid form.

7. Process for protection against birds of the zones from which it is desired to banish the said birds, characterized in that a composition according to any one of Claims 1 to 3 is placed inside the said zones in evaporators.

8. Process according to Claim 7, characterized in that the composition used is in the form of a paste.

FIGURE 1

FIGURE 2

0113614

FIGURE 3

FIGURE 4